# EUROPEAN PATENT SPECIFICATION

(11) **EP 2 975 231 B1**
(45) Date of publication and mention of the grant of the patent: **04.01.2017**
(21) Application number: 15175783.8
(22) Date of filing: 08.07.2015
(51) Int. Cl.: F01N 3/021, F01N 3/08, F01N 3/10, F01N 3/20, F01N 3/36, F01N 13/00

(54) **REDUCING AGENT SUPPLYING DEVICE**
REDUKTIONSMITTELVERSORGUNGSVORRICHTUNG
DISPOSITIF D'ALIMENTATION EN AGENT DE RÉDUCTION

(30) Priority: 17.07.2014 JP 2014147135
(43) Date of publication of application: 20.01.2016
(73) Proprietor: DENSO CORPORATION, Kariya-city, Aichi-pref. 448-8661 (JP)
(72) Inventor: KINUGAWA, Masumi, Kariya-city, Aichi 448-8661 (JP); YAHATA, Shigeto, Kariya-city, Aichi 448-8661 (JP); TARUSAWA, Yuuki, Kariya-city, Aichi 448-8661 (JP); MAJIMA, Yusuke, Kariya-city, Aichi 448-8661 (JP); HOSODA, Mao, Kariya-cityAichi 448-8661 (JP)
(74) Representative: Kuhnen & Wacker

(56) References cited:
- EP-A1- 2 386 738
- EP-A2- 0 971 102
- DE-A1-102004 048 335
- FR-A1- 2 943 381
- JP-A- H1 089 057
- JP-A- 2000 240 441
- US-A1- 2008 069 744

## Description

### TECHNICAL FIELD

The present disclosure relates to a reducing agent supplying device for supplying a reducing agent used for NOx reduction into an exhaust passage at a position upstream of a reducing catalyst.

### BACKGROUND

Generally, NOx (Nitrogen Oxides) contained in exhaust gas of an internal combustion engine may be purified in reaction of the NOx with a reducing agent in the presence of a reducing catalyst. For example, a patent literature (JP 2009-162173 A) discloses a purifying system that includes a device reforming a reducing agent through a plasma discharging process. The purifying system supplies the reformed fuel into an exhaust passage at a position upstream of a reducing catalyst. In the system, fuel (hydrocarbon compound) used for combustion in an internal combustion engine is also used as the reducing agent.

In EP 0 971 102 A2 a NOx reduction system is provided which includes a Nox catalytic converter mounted in an exhaust passage of an engine, such as a diesel engine, and an air supply passage (31) that communicates with a portion of the exhaust passage located upstream of te Nox catalytic converter. The air supply passage supplies the exhaust passage with a mixture of the air and cracked gas obtained by spraying fuel into the air and heating it up to 350-450 °C for partial oxidation thereof. With the mixture added to the exhaust gas, Nox contained in the exhaust gas can be effectively removed due to the Nox reducing capability of the cracked gas.
JP 2000 240441 A provides a downstream end of an air supplying passage to be housed in an exhaust gas passage on the upstream side of a NOx catalyst is provided as heating means according to the operating state of an engine, and the air metered by a flow control valve is supplied thereto. In the middle part of the air supplying passage, a gas oil (fuel) supplied from a branch fuel supplying passage is injected through a fuel injection valve, and the resulting mixed body of air with atomized gas oil is guided to the downstream end part, where the mixed is heated with exhaust gas. The gas oil is thus partially oxidized to form a decomposed gas containing a large quantity of aldehyde such as acetaldehyde highly reductive of NOx and propylene, so that the NOx in the exhaust gas is efficiently reduced.

### SUMMARY

As a method for reforming fuel as described above, the inventors of the present disclosure have studied an approach where fuel is heated to a specified temperature, and then the heated fuel is partially oxidized and reformed by having the fuel reacts with oxygen in air,. The partially oxidized fuel has a high reducing capacity, whereby a sufficient NOx reducing rate can be acquired even when a temperature of a catalyst is low.

Furthermore, to realize the above-described approach, the inventors have studied the configuration where an injector for injecting liquid fuel and a heater are disposed in an air pipe defining an air passage therein. With this configuration, injected liquid fuel is heated to a temperature by the heater and is vaporized, and then the vaporized fuel is partially oxidized with oxygen inside the air passage. As a result, the fuel is reformed and the reformed fuel is eventually supplied into an exhaust passage together with air.

However, in such a configuration where a heater is disposed in the air passage, since the heater is cooled by air flowing through the air passage, a large amount of heat may be not used for reforming the fuel. As a result, heat loss at the heater may be increased.

It is an objective of the present disclosure to provide a reducing agent supplying device where loss in heat for reforming a reducing agent is suppressed.

In an aspect of the present disclosure, a reducing agent supplying device is for a fuel combustion system that includes a NOx purifying device with a reducing catalyst arranged in an exhaust passage to purify NOx contained in exhaust gas of an internal combustion engine. The reducing agent supplying device supplies a reducing agent into the exhaust passage at a position upstream of the reducing catalyst. The reducing agent supplying device includes an air pipe, a vaporizing container, an injector, a heating member and a mixing plate. The air pipe defines an air passage therein. The vaporizing container is connected to the air pipe. The vaporizing chamber defines a vaporizing chamber therein that branches off from the air passage. The injector injects liquid hydrocarbon compound as a reducing agent. The heating member is disposed in the vaporizing chamber. The heating member heats and vaporizes the reducing agent injected from the injector. The mixing plate is connected to the heating member. The mixing plate extends from the vaporizing chamber into the air passage.

According to the aspect of the present disclosure, since the heating member is disposed in the vaporizing chamber that branches off from the air passage, it is possible to suppress the heating member to be cooled by air flowing through the air passage. Thus, loss of heat to be used for reforming the reducing agent can be reduced. However, according to the study by the inventors, when the vaporizing chamber is disposed and the reducing agent is heated in the vaporizing chamber, a concern that mixing quality of the reducing agent with air is deteriorated, as described below, may be newly generated. To address the concern, the mixing pate is provided in the aspect of the present disclosure.

That is, if the mixing plate is not provided, most of the reducing agent in gaseous form, which flows from the vaporizing chamber into the air passage through a connecting portion (inlet) of the vaporizing chamber, would flow along a wall surface of the air passage. Thus, the reducing agent would be less likely to diffuse in a direction angled with an airflow direction of air in the air passage. As a result, the mixing quality of the reducing agent with air would deteriorate, and thus partial oxidation of the reducing agent with oxygen in air would become insufficient. Accordingly, there may be a concern that the reformation of the reducing agent would become insufficient.

To address the above concern, the mixing plate extending from the vaporizing chamber into the air passage is provided. Thus, the reducing agent that was heated in the vaporizing chamber is guided into the air passage by the mixing plate. Hence, diffusion of the reducing agent in the air passage in the direction angled with the airflow direction can be accelerated, whereby the mixing of the reducing agent with air can be accelerated.

According to the aspect of the present disclosure, heat loss can be suppressed by disposing the heating member inside the vaporizing chamber that branches off from the air passage. Further, the above-described newly generated concern of the mixing quality deterioration can be also suppressed by providing the mixing plate.

### BRIEF DESCRIPTION OF THE DRAWINGS

The disclosure, together with additional objectives, features and advantages thereof, will be best understood from the following description, the appended claims and the accompanying drawings, in which:
Fig. 1 is a schematic view of a reducing agent supplying device applied to a combustion system;
Fig. 2 is a cross-sectional view of the reducing agent supplying device;
Fig. 3 is a cross-sectional view of a fuel injector illustrating a cross-sectional shape of injection holes;
Fig. 4 is a diagram viewed from the arrow IV in Fig. 3;
Fig. 5 is a cross-sectional view along the VI-VI line in Fig. 2;
Fig. 6 is a diagram viewed from the arrow V in Fig. 2;
Fig. 7 is a cross-section view along the VII-VII line in Fig. 6;
Fig. 8 is a cross-section view along the VIII-VIII line in Fig. 7;
Fig. 9 is a perspective view of an elastic member;
Fig. 10 is a perspective view of the elastic member in a developed state;
Fig 11 is graphs related to a two-step oxidation reaction of a cool flame reaction and a hot flame reaction;
Fig. 12 is a diagram illustrating reaction process of the cool flame reaction;
Fig. 13 is a region of an ambient temperature and an equivalent ratio where the two-step oxidation reaction occurs;
Fig. 14 is a flowchart illustrating a process to change an operation mode between an ozone generating control and a reformed fuel generating control (a partial oxidation mode);
Fig. 15 is a flowchart illustrating a sub-routine process of the reformed fuel generation control (the partial oxidation mode);
Fig. 16 is a graph showing a simulation result indicating heat loss effects by the reducing agent supplying device; and
Fig. 17 is a schematic view of a reducing agent supplying device applied to a combustion system.

### DETAILED DESCRIPTION

A plurality of embodiments of the present disclosure will be described hereinafter referring to drawings. In the embodiments, a part that corresponds to a matter described in a preceding embodiment may be assigned with the same reference numeral, and redundant explanation for the part may be omitted. When only a part of a configuration is described in an embodiment, another preceding embodiment may be applied to the other parts of the configuration. The parts may be combined even if it is not explicitly described that the parts can be combined. The embodiments may be partially combined even if it is not explicitly described that the embodiments can be combined, provided there is no harm in the combination.

### (First Embodiment)

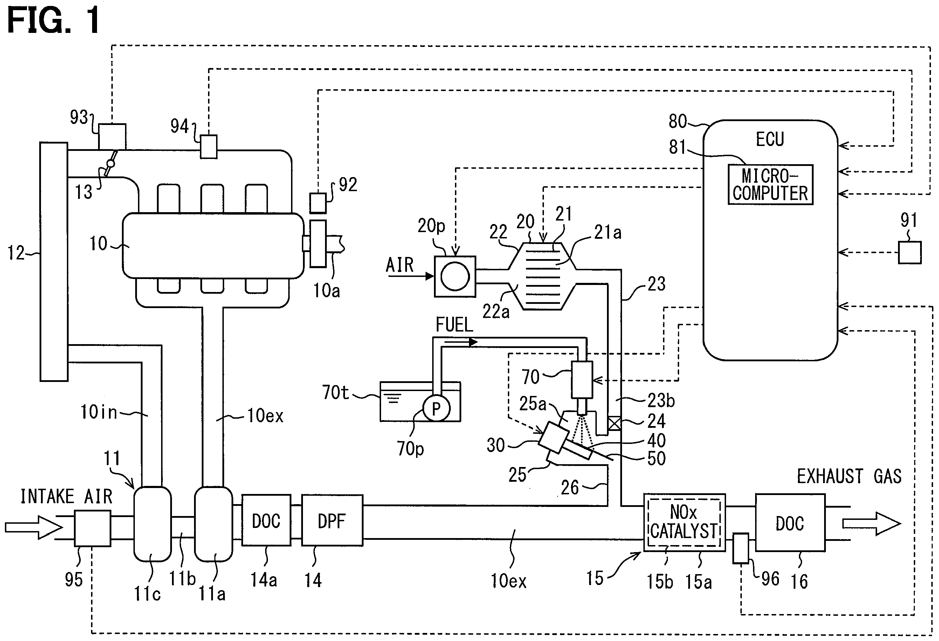

A combustion system as illustrated in Fig. 1 includes an internal combustion engine 10, a supercharger 11, a diesel particular filter (DPF 14), a DPF regeneration device (regenerating DOC 14a), a NOx purifying device 15, a reducing agent purifying device (purifying DOC 16) and a reducing agent supplying device. The combustion system is mounted on a vehicle and the vehicle is powered by an output from the internal combustion engine 10. In the present embodiment, the internal combustion engine 10 is a compression self-ignition diesel engine using diesel fuel (light oil) for combustion.

The supercharger 11 includes a turbine 11 a, a rotating shaft 11 b and a compressor 11 c. The turbine 11 a is disposed in an exhaust passage 10ex for the internal combustion engine 10 and rotates by kinetic energy of exhaust gas. The rotating shaft 11 b connects an impeller of the turbine 11 a to an impeller of the compressor 11 c and transmits a rotating force of the turbine 11 a to the compressor 11c. The compressor 11c is disposed in an intake passage 10in of the internal combustion engine 10 and supplies intake air to the internal combustion engine 10 after compressing (i.e., supercharging) the intake air.

A cooler 12 is disposed in the intake passage 10in downstream of the compressor 11c. The cooler 12 cools intake air compressed by the compressor 11c, and the compressed intake air cooled by the cooler 12 is distributed into plural combustion chambers of the internal combustion engine 10 through an intake manifold after a flow amount of the compressed intake air was adjusted by a throttle valve 13.

The regenerating DOC 14a (Diesel Oxidation Catalyst), the DPF 14 (Diesel Particulate Filter), the NOx purifying device 15, and the purifying DOC 16 are disposed in this order in the exhaust passage 10ex downstream of the turbine 11a. The DPF 14 collects particulates contained in exhaust gas. The regenerating DOC 14a includes a catalyst that oxidizes unburned fuel contained in the exhaust gas and that burns the unburned fuel. By burning the unburned fuel, the particulates collected by the DPF 14 are burned and the DPF 14 is regenerated, whereby the collecting capacity of the DPF 14 is maintained. It should be noted that this burning by the unburned fuel inside the regenerating DOC 14a is not constantly executed but is temporarily executed when the regeneration of the DPF 14 is required.

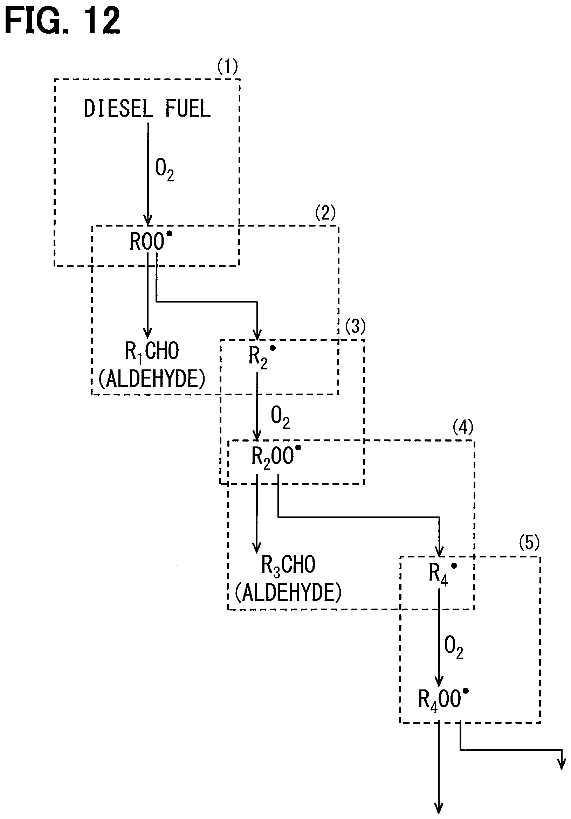

A supply passage 26 of the reducing agent supplying device is connected to the exhaust passage 10ex downstream of the DPF 14 and upstream of the NOx purifying device 15. A reformed fuel generated by the reducing agent supplying device is supplied as a reducing agent into the exhaust passage 10ex through the supply passage 26. The reformed fuel is generated by partially oxidizing hydrocarbon (i.e., fuel), which is used as a reducing agent, into partially oxidized hydrocarbon, such as aldehyde, as will be described later with reference to Fig. 12.

The NOx purifying device 15 includes a honeycomb carrier 15b for carrying a reducing catalyst and a housing 15a housing the carrier 15b therein. The NOx purifying device 15 purifies NOx contained in exhaust gas through a reaction of NOx with the reformed fuel in the presence of the reducing catalyst, i.e., a reduction process of NOx into N₂. It should be noted that, although O₂ (oxygen) is also contained in the exhaust gas in addition to NOx, the reformed reducing agent selectively (preferentially) reacts with NOx in the presence of O₂.

In the present embodiment, the reducing catalyst has adsorptivity to adsorb NOx. More specifically, the reducing catalyst exhibits the adsorptivity to adsorb NOx in the exhaust gas when a catalyst temperature is lower than an activation temperature at which reducing reaction by the reducing catalyst can occur. Whereas, when the catalyst temperature is equal to or higher than the activation temperature, NOx adsorbed by the reducing catalyst is reduced by the reformed fuel and then is released from the reducing catalyst. For example, the NOx purifying device 15 may provide NOx adsorption performance with a silver/alumina catalyst that is carried by the carrier 15b.

The purifying DOC 16 has a housing that houses a carrier carrying an oxidation catalyst. The purifying DOC 16 oxidizes the reducing agent, which flowed out of the NOx purifying device 15 without being used for NOx reduction, in the presence of the oxidation catalyst. Thus, the reducing agent can be prohibited from releasing into an atmosphere through an outlet of the exhaust passage 10ex. It should be noted that an activation temperature of the oxidation catalyst (e.g., 200°C) is lower than the activation temperature (e.g., 250°C) of the reducing catalyst.

Next, the reducing agent supplying device will be described below. Generally, the reducing agent supplying device generates the reformed fuel and supplies the reformed fuel into the exhaust passage 10ex through the supply passage 26. The reducing agent supplying device includes a discharging reactor 20, an air pump 20p, an air pipe 23, a vaporizing container 25, a heater 30, a heat plate 40, a mixing plate 50, a retaining member 60, and an injector 70, as will be described in detail.

The discharging reactor 20 includes a housing 22 having a fluid passage 22a therein and a plurality of pairs of electrodes 21 are arranged inside the fluid passage 22a. The electrodes 21 have a plate shape and are arranged to face each other in parallel. One electrode 21, which is grounded, and the other electrode 21, which is applied with high voltage when electric power is supplied to the discharging reactor 20, are alternately arranged. Power application to the electrodes 21 is controlled by a microcomputer 81 of an electric control unit (ECU 80).

Air blown by the air pump 20p flows into the housing 22 of the discharging reactor 20. The air pump 20p is driven by an electric motor, and the electric motor is controlled by the microcomputer 81. The air blown by the air pump 20p flows into the fluid passage 22a within the housing 22, and flows through the discharging passages 21 a formed between the electrodes 21.

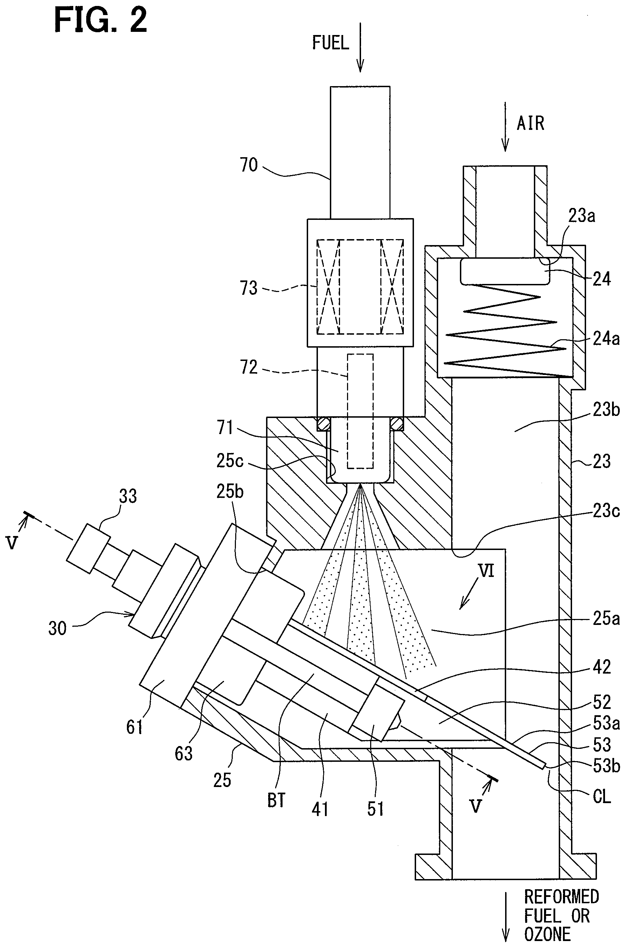

The air pipe 23 is connected to a downstream portion of the discharging reactor 20. The air pipe 23 defines an air passage 23b therein. Air that flowed through the discharging passages 21 a flows into the air passage 23b. The supply passage 26 is connected to a lower portion of the air pipe 23. A check valve 24 is disposed in the air pipe 23. The check valve 24 closes the air passage 23b when the check valve 24 contacts a valve seat 23a formed in the air pipe 23 (see Fig. 2). When the air pump 20p is operated to increase a pressure on an upstream side of the check valve 24, the check valve 24 moves to separate from the valve seat 23a against an elastic force of a spring 24a and opens the air passage 23b. A backflow of the reformed fuel from the supply passage 26 toward the discharging reactor 20 is prevented by the check valve 24 when the air pump 20p is off.

A vaporizing container 25 is connected to the air pipe 23 at a downstream side of the check valve 24, and a vaporizing chamber 25a is formed inside the vaporizing container 25. The vaporizing chamber 25a branches off from the air passage 23b and has a dead-end shape. The vaporizing chamber 25a is in fluid communication with the air passage 23b. More detail, the air passage 23b includes a straight portion linearly extending in a vertical direction, and the vaporizing chamber 25a protrudes from the straight portion of the air passage 23b in a horizontal direction. The vaporizing chamber 25a is in fluid communication with the air passage 23b through an inlet 23c formed in the air pipe 23. The air pipe 23 and the vaporizing container 25 are formed of metal.

As shown in Fig. 2, a heater attaching hole 25b and an injector attaching hole 25c are formed in the vaporizing container 25. The heater 30 is attached in the heater attaching hole 25b in a state where the heater 30 is inserted into the heater attaching hole 25b. Similarly, the injector 70 is attached in the injector attaching hole 25c in a state where the injector 70 is inserted into the injector attaching hole 25c. The injector attaching hole 25c extends in the vertical direction and the heater attaching hole 25b extends in a direction angled with the vertical direction (i.e., a insertion direction of the injecter 70).

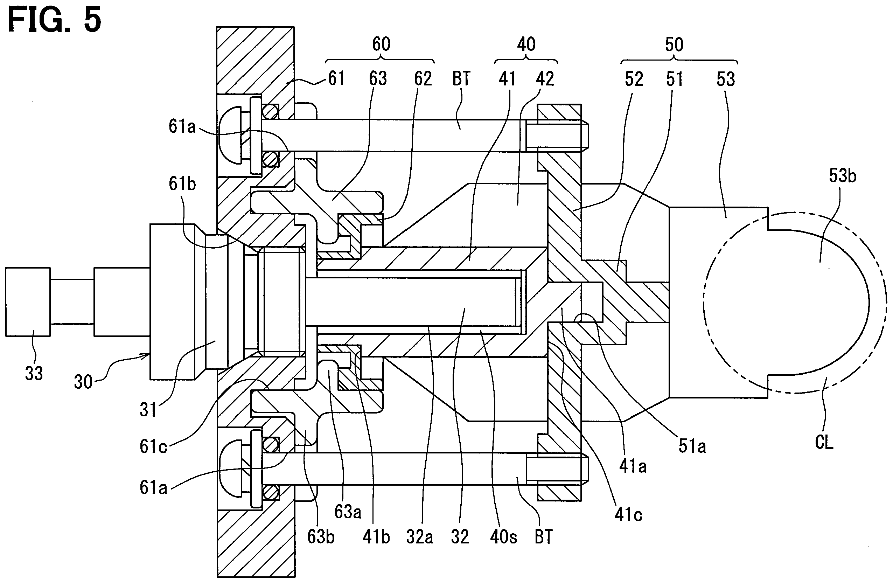

The heater 30 includes a body portion 31, a heating portion 32 held by the body portion 31 and an electric connector 33. The heating portion 32 includes a heating element, which generates heat by electric power supplied through the electric connector 33, and a heat transfer cover, which covers the heating element. The heating portion 32 has a columnar shape, which extends in an insertion direction of the heater 30. An outer surface of the heat transfer cover, which has a cylindrical shape with a bottom, serves as a heating surface 32a (refer to Fig. 5). Power supply to the electric connector 33 is controlled by the microcomputer 81. Specifically, the microcomputer 81 performs a duty control to a power supply amount to the heating portion 32 to adjust a heat generating amount.

The injector 70 includes a body 71 made of metal, a valve element 72 housed inside the body 71, and an electric actuator 73. A plurality of injection holes 71 a, 71 b, 71 c are formed in a distal end of the body 71. A pump 70p supplies liquid fuel from a fuel tank 70t illustrated in Fig. 1 into the injector 70, and the liquid fuel is injected into the vaporizing chamber 25a through the injection holes 71 a, 71 b, 71 c. The fuel inside the fuel tank 70t is also used as fuel for combustion, as described above. That is, the fuel in the fuel tank 70t is commonly used as fuel for combustion in the internal combustion engine 10 and fuel for the reducing agent.

When the electric actuator 73 is on, the valve element 72 is moved to open the injection holes 71 a, 71 b, 71 c and fuel is injected though the injection holes 71 a, 71 b, 71 c. Whereas, when the electric actuator 73 is off, the valve element 72 is moved to close the injection holes 71 a, 71 b, 71 c and thus the fuel injection is stopped. The microcomputer 81 controls a fuel injection amount to the vaporizing chamber 25a per unit time by controlling power supply to the electric actuator 73.

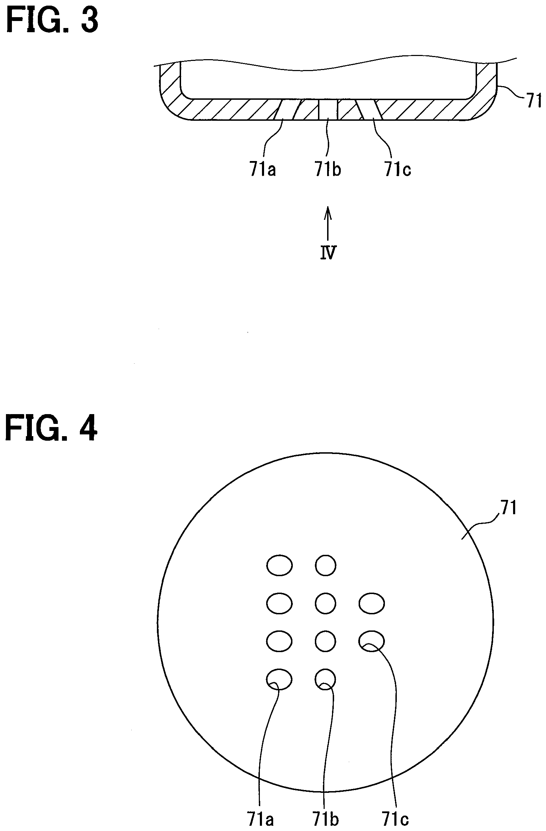

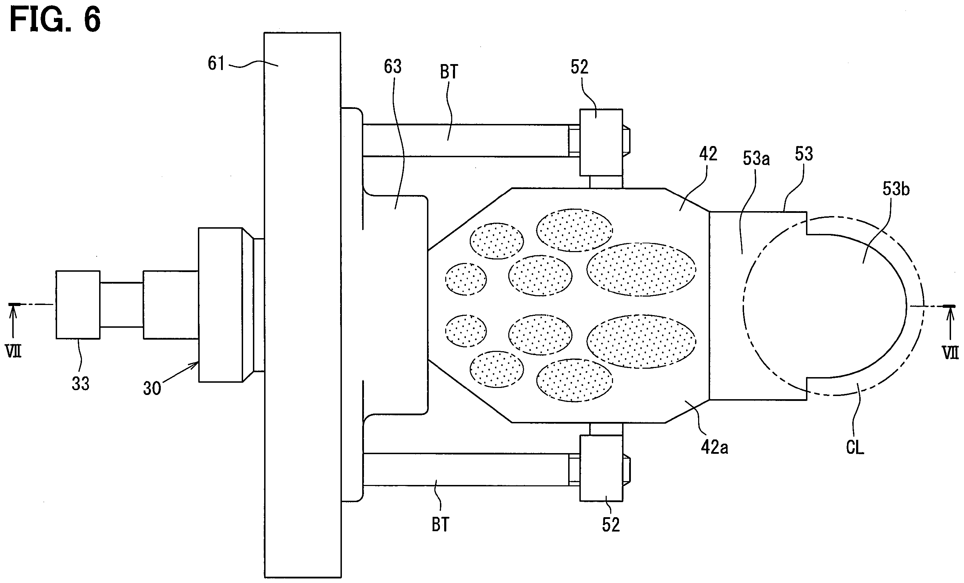

As shown in Figs. 3 and 4, the injection holes 71 a, 71 b, 71 c have a shape extending linearly, i.e., the injection holes 71 a, 71 b, 71 c have an axis that linearly extends. A cross section of each injection hole 71 a, 71 b, 71 c is a circle shape and the injection hole 71 a, 71 b, 71 c has a constant cross-sectional area. Fuel in liquid form (liquid fuel) is sprayed (atomized) through each injection hole 71 a, 71 b, 71 c and the splayed liquid fuel spreads in a substantially cone shape. In other words, a spray trajectory of the sprayed liquid fuel has a substantially cone shape spreading in a direction away from each injection hole 71 a, 71 b, 71 c. The sprayed fuel collides with the heat plate 40. The injection holes 71 a, 71 b, 71 c are positioned above the heat plate 40. The doted portions in Fig. 6 represent collision areas by the splayed fuel on the heat plate 40. The arrangement and the shape of the injection holes 71 a, 71 b, 71 c and the distance between each injection hole 71 a, 71 b, 71 c and the heat plate 40 are set such that the sprayed fuel does not overlap each other and is within the heat plate 40 (i.e., does not exceed the heat plate 40).

The heat plate 40 is heated by the heater 30 and liquid fuel collided with the heat plate 40 is heated and vaporized by the heat plate 40. The vaporized fuel is further heated inside the vaporizing chamber 25a to a temperature equal to or higher than a predetermined certain temperature. As a result, the fuel is thermally decomposed into hydrocarbon that has a small carbon number, i.e., cracking occurs. Because the fuel after the cracking has a low boiling point, the vaporized fuel is suppressed to change into liquid form.

More detail, liquid fuel is injected with the Weber number (We) of 80 or more such that the liquid fuel collides with the heat plate 40 and then the liquid fuel splashes and is splattered. More appropriate, a plurality of droplets of the liquid fuel form the spray and each droplet collides with the heat plate 40. Then, each droplet further breaks into a plurality of fine drops and the fine drops splash. The size of each fine drop decreases as the number of fine drops increases. Thus, the fine drops float a region around the heat plate 40. As a result, the quantity of heat, which the liquid fuel receives from the heat plate 40, increases, and thus the vaporizing of the fuel and the cracking are accelerated.

Next, the structures of the heat plate 40, the mixing plate 50 and the retaining member 60 will be described with reference to Figs. 5 to 8.

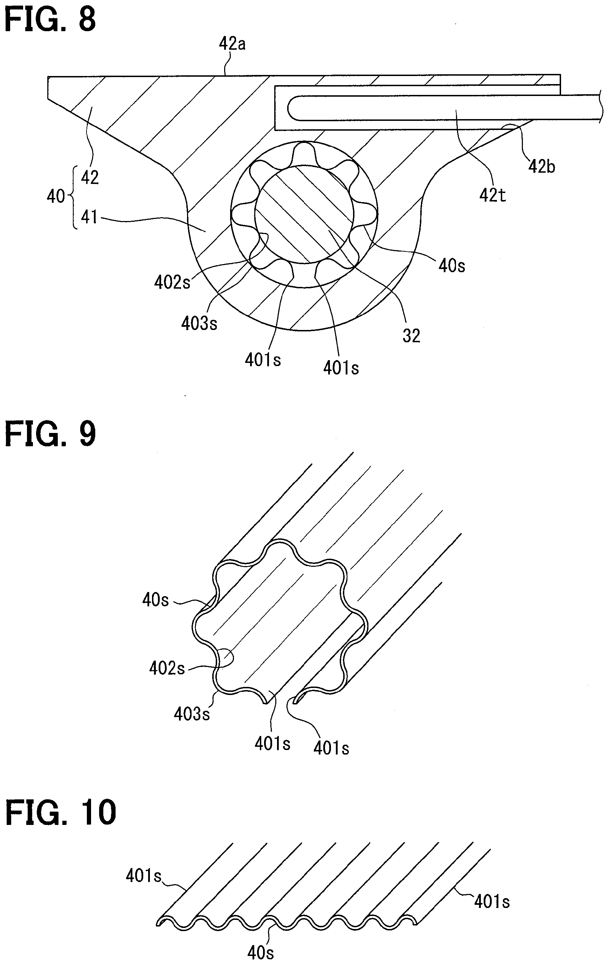

The heat plate 40 is made of metal (e.g., copper, stainless steel) and includes a cylindrical portion 41 having a bottom, and a plate portion 42. The plate portion 42 has a top surface having a flat shape, and the top surface of the plate portion 42 acts as a collision surface 42a with which fuel collides. The heating portion 32 of the heater 30 is inserted into the cylindrical portion 41. An elastic member 40s is disposed in a space between the cylindrical portion 41 and the heating portion 32 while being elastically deformed in a radial direction of the heating portion 32 (refer to Fig. 8).

The elastic member 40s is formed of a plate sheet in a wave form as shown in Fig. 10 by elastically curving the plate sheet such that both ends 401 s of the plate sheet face each other. Thus, the elastic member 40s has a curving shape (refer to Fig. 9). The elastic member 40s has a plurality of internal protrusions 402s and the internal protrusions 402s are elastically pressed against an outer surface of the heating portion 32 by an elastic force of the elastic member 40s. The elastic member 40s has a plurality of outer protrusions 403s and the outer protrusions 403s are pressed against an internal surface of the cylindrical portion 41 by an elastic force of the elastic member 40s. That is, the elastic member 40s is in contact with both the cylindrical portion 41 and the heating portion 32 in a state where the elastic member 40s is pressed against the cylindrical portion 41 and the heating portion 32.

The elastic member 40s is made of metal. The heat plate 40 needs to be heated to a high temperature (e.g., 600°C), which is much higher than the boiling point of fuel, in order to combust deposits on the heat plate 40. Thus, the elastic member 40s is preferably formed of material that can exhibit elasticity at such a high temperature. For example, an alloy composed mainly of nickel and chrome may serve as the material for the elastic member 40s.

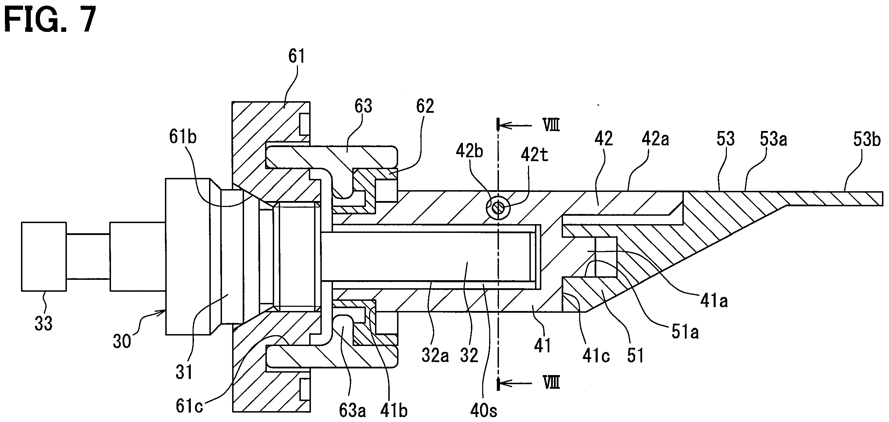

The mixing plate 50 is made of metal (e.g., copper, stainless steel). The mixing plate 50 includes a connecting portion 51 connected to the cylindrical portion 41, an arm portion 52 extending from the connecting portion 51 along the radial direction of the cylindrical portion 41, and the mixing plate portion 53 having a plate shape. The mixing plate portion 53 has a top surface in a flat shape, which serves a guide surface 53a continuously extending from the collision surface 42a, as shown in Fig. 7.

As shown in Fig. 2, the mixing plate portion 53 has a shape extending from the vaporizing chamber 25a into the air passage 23b through the inlet 23c. The mixing plate portion 53 is disposed such that a distal end 53b of the guide surface 53a is angled toward a downstream side of an airflow direction in the air passage 23b. The distal end 53b has a round shape along an inner wall of the air pipe 23 (refer to Fig. 5). A space formed between the distal end 53b and the inner wall of the air pipe 23 serves as a narrow space CL through which air flows. In other words, a cross-sectional area of the air passage 23b is narrowed at the narrow space CL. As a result, a flow rate of air flowing through the air passage 23b becomes high at the narrow space CL.

The vaporized fuel that collided with the collision surface 42a of the heat plate 40 is guided by the guide surface 53a of the mixing plate portion 53 toward the distal end 53b. Since the distal end 53b is exposed into the air passage 23b, air flowing through the air passage 23b collides with the distal end 53b and then is mixed with the vaporized fuel guided by the guide surface 53a. As a result, the vaporized fuel is partially oxidized with oxygen in the air and is reformed into a partially oxidized hydrocarbon, such as aldehyde. In this way, the vaporized fuel (i.e., reformed fuel) reformed on the mixing plate portion 53 flows toward a downstream side of the mixing plate portion 53 through the narrow space CL, and then flows into the exhaust passage 10ex through the supply passage 26.

As shown in Fig. 8, a temperature sensor 42t is disposed in the plate portion 42 and the temperature sensor 42t detects a temperature of the heat plate 40. Specifically, an insertion hole 42b is formed in the plate portion 42 and the temperature sensor 42t is inserted into the insertion hole 42b. The insertion hole 42b extends along a direction perpendicular to an extending direction of the cylindrical portion 41 and extends along a direction parallel to the collision surface 42a. The temperature sensor 42t outputs a detected value of the temperature to the ECU 80.

When electric power is supplied to the discharging reactor 20, electrons emitted from the electrodes 21 collide with oxygen molecules contained in air in the discharging passages 21 a. As a result, ozone is generated from the oxygen molecules. That is, the discharging reactor 20 brings the oxygen molecules into a plasma state through a discharging process, thereby generating ozone as active oxygen. Thus, when electric power is supplied to the discharging reactor 20, air containing the ozone flows through the air passage 23b and collides with the mixing plate portion 53.

A cool flame reaction occurs in the vaporizing chamber 25a or a region of the air passage 23b upstream of the mixing plate portion 53. In the cool flam reaction, fuel in gas form is partially oxidized with oxygen or ozone in air. The fuel partially oxidized is called "reformed fuel", and partial oxide (for example, aldehyde) may be one example of the reformed fuel in which a portion of the fuel (hydrocarbon compound) is oxidized with an aldehyde group (CHO).

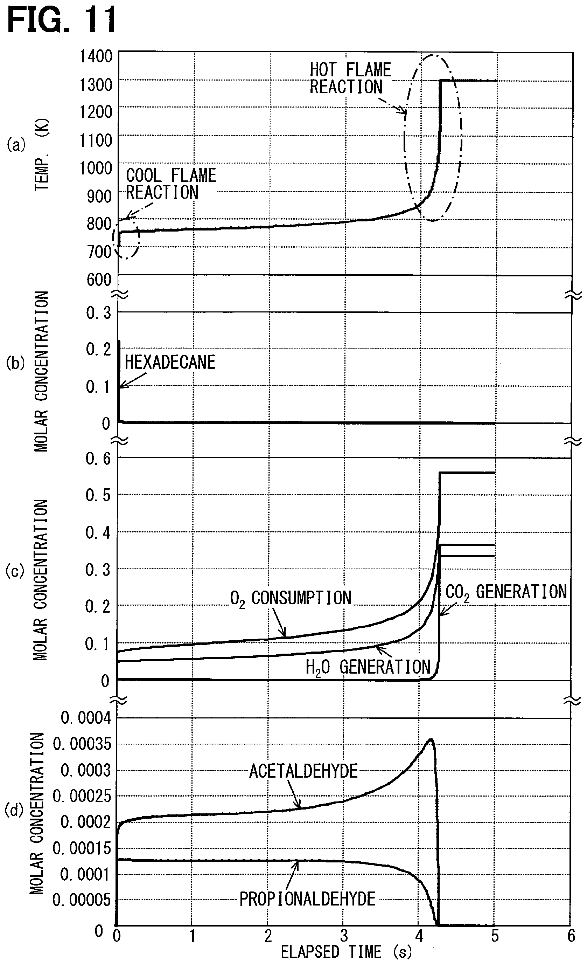

Next, the cool flame reaction will be described in detail with reference to Figs. 11 to 12.

Fig 11 illustrates simulation results showing a phenomenon where fuel (hexadecane) is sprayed onto the heater 30 and is vaporized, and the vaporized fuel staying around the heater 30 is reformed. Specifically, each graph shows, in a case where the vaporized fuel (hexadecane) is exposed to an environment at 430°C, changes of a variety of physical quantities with respect to an elapsed time after the exposure. In Fig. 11, a graph (a) illustrates a change in an ambient temperature, a graph (b) illustrates a change in a molar concentration of the fuel, a graph (c) illustrates changes in a molar concentration of (i) oxygen consumed through the oxidation process, (ii) water molecules generated through the oxidation process and (iii) carbon dioxide molecules generated through the oxidation process, and a graph (d) illustrates changes in a molar concentration of acetaldehyde and propionaldehide, each of which is a reformed fuel generated through the cool flame reaction. Initial conditions at the start of the fuel injection are set with 1 atmospheric pressure, 2200ppm of hexadecane concentration, 20% of oxygen concentration, 9% of carbon dioxide concentration and 2% of water concentration.

As shown in Fig. 11, the ambient temperature increases, the molar concentration of the fuel decreases, and the molar concentration of the reformed fuel increased, immediately after injecting the fuel. This means that fuel generates heat by being oxidized with oxygen and that the reformed fuel is generated from the fuel, i.e., the cool flame reaction occurs. However, such a temperature increase and changes in molar concentration are temporary, and the temperature increase and the changes in the molar concentration do not appear until about 4 seconds elapse from the start of the fuel injection.

As shown in Fig. 11, when about 4 seconds elapse, the ambient temperature further increases, the molar concentration of the reformed fuel decreases, generation amounts of carbon dioxide and water increase, and a consumption amount of oxygen increases. This means that the reformed fuel generates heat by being oxidized with oxygen and that the reformed fuel completely burns to generate carbon dioxide and water, i.e., the hot flame reaction occurs. A temperature increase amount through the cool flame reaction is less than that through the hot flame reaction. Further, an oxygen consumption amount through the cool flame reaction is less than that through the hot flame reaction.

As shown in Fig. 11, when the oxidation reaction occurs through two steps, the reformed fuel is generated as a reaction intermediate during a period from the cool flame reaction to the hot flame reaction. Examples of the reaction intermediate may be a variety of hydrocarbon compounds, such as aldehyde, ketone, or the like. Fig. 12 illustrates an example of a main reaction path through which aldehyde is generated.

As indicated by (1) in Fig. 12, hydrocarbon (diesel fuel) reacts with oxygen molecule and hydrocarbon peroxyl radical is generated. The hydrocarbon peroxyl radical is decomposed into aldehyde and hydrocarbon radical (refer to (2) in Fig. 12). The hydrocarbon radical reacts with an oxygen molecule and another hydrocarbon peroxyl radical is generated (refer to (3) in Fig. 12). The hydrocarbon peroxyl radical is decomposed into aldehyde and hydrocarbon radical (refer to (4) in Fig. 12). The hydrocarbon radical reacts with an oxygen molecule and also another hydrocarbon peroxyl radical is generated (refer to (5) in Fig. 12). In this way, hydrocarbon peroxyl radical is repeatedly generated while reducing the carbon number, and aldehyde is generated each time the hydrocarbon peroxyl radical is generated. It should be noted that, in the hot flame reaction, fuel is completely combusted and carbon dioxide and water are generated, and thus the reaction intermediate is not generated. In other words, the reaction intermediate generated through the cool flame reaction is oxidized into carbon dioxide and water during the hot flame reaction.

The inventors of the present disclosure had further carried out following experiments to confirm the probability of the simulation results shown in Fig .11. In the experiments, the fuel injector 70 sprayed diesel fuel, and the sprayed diesel fuel was brought into collision against a heated plate (not shown) at 500°C. Then, gas components vaporized on the heated plate were analyzed. As a result of the analysis, it was confirmed that acetaldehyde of about 30ppm was generated when diesel fuel of 2000ppm was brought into collision with the heated plate. The analysis result indicates that acetaldehyde can be generated through the cool flame reaction.

In the simulation as shown in Fig. 11, an exposure temperature for fuel was set to 430°C. The inventors of the present disclosure further had performed simulation with different the exposure temperatures. As a result, it was found that, when the exposure temperature is 530°C, there was almost no period to stay in the cool flame reaction, and the oxidation reaction was completed with only one step. On the contrary, when the exposure temperature was set to 330°C, a start timing of the cool flame reaction was delayed as compared with a case where the exposure temperature was set to 430°C. Also, when the exposure temperature was set to 230°C or lower, none of the cool flame reaction and the hot flame reaction occurred, i.e., the oxidation reaction did not occur.

In the simulation illustrated in Fig. 11, the equivalent ratio, which is a weight ratio of injected fuel to supplied air, is set to 0.23. In this connection, the present inventors have obtained results of the simulation with the different equivalent ratios. It should be noted that the equivalent ratio may be defined as a value by dividing "weight of fuel contained in an air-fuel mixture" by "weight of fuel that can be completely burned". When the equivalent ratio is set to 1.0, there is almost no period to stay in the cool flame reaction, and the oxidation reaction is completed with only one step. Also, when the equivalent ratio is set to 0.37, the start timing of the cool flame reaction is advanced, a cool flame reaction rate increases, a cool flame reaction period decreases, and the ambient temperature at the time of completing the cool flame reaction increases, as compared with a case in which the equivalent ratio is set to 0.23.

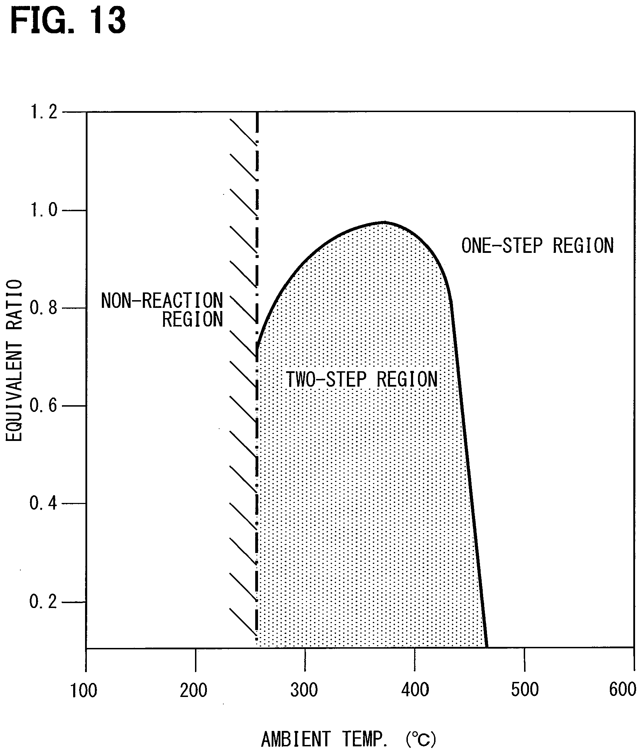

Fig. 13 illustrates a summary of the analysis results as described above. Fig. 13 indicates a relationship between the exposure temperature (the ambient temperature), the equivalent ratio, and occurrence/non-occurrence of the cool frame reaction. In Fig. 13, the abscissa of the graph indicates the exposure temperature (the ambient temperature) and the ordinate of the graph indicates the equivalent ratio. The doted region in Fig. 13 is a region in which a two-step oxidation reaction occurs. As shown in Fig. 13, a region in which the ambient temperature is lower than a lower limit value is a non-reaction region in which the oxidation reaction does not occur. Further, even when the ambient temperature is higher than the lower limit value, a region in which the equivalent ratio is equal to or greater than 1.0 is a one-step oxidation reaction region in which the oxidation is completed with only one step.

A boundary line between the two-step oxidation reaction region and the one-step oxidation reaction region varies according to the ambient temperature and the equivalent ratio. That is, when the ambient temperature falls within a specified temperature range and the equivalent ratio falls within a specified equivalent ratio range, the two-step oxidation reaction occurs. That is, the specified temperature range and the specified equivalent ratio range correspond to the doted region in Fig. 13. When the ambient temperature is set to an optimum temperature (e.g., 370°C) within the specified temperature range, the equivalent ratio on the boundary line has a maximum value (e.g., 1.0). Thus, in order to generate the cool flame reaction earlier, the heater temperature is adjusted to the optimum temperature and the equivalent ratio is set to 1.0. However, when the equivalent ratio is greater than 1.0, the cool flame reaction does not occur. Thus, the equivalent ratio is preferably set to a value less than 1.0 by a given margin.

In the simulation as shown in Fig. 11, an ozone concentration in air is set to zero. The inventors of the present disclosure had further performed simulation with different ozone concentrations in air. In the simulation, an initial condition was set with 1 atmospheric pressure, a hexadecane concentration of 2200ppm, and the ambient temperature of 330°C. As a result, it was found that the start timing of the cool flame reaction became earlier as the ozone concentration increased. Such a phenomenon can be explained as below. As described above, hydrocarbon radical reacts with oxygen molecule in (1), (3) and (5) in Fig. 12, and these reaction are accelerated with ozone contained in air. As a result, aldehyde is generated in a short time.

Referring to Figs. 5 to 7, the retaining member 60 and the mixing plate 50 are bounded by binding members BT. Each binding member BT includes a bolt structure. Due to the binding, the heat plate 40 is held by the retaining member 60 and the mixing plate 50 while the heat plate 40 being interposed therebetween. The retaining member 60 includes a container-side portion (first portion) 61 made of metal, a heat-plate-side portion (second portion) 62 made of metal and an intermediate member (intermediate portion) 63 made of ceramic.

The container-side member 61 is inserted into and disposed in the heater attaching hole 25b (refer to Fig. 2) of the vaporizing container 25, and fixed to the vaporizing container 25 by a fixing member (not shown) such as bolts. An inserting hole 61 a (refer to Fig. 5) for the binding member BT is formed in the container-side member 61. One end of the binding member BT, which is inserted through the inserting hole 61 a, is fastened to the arm portion 52 of the mixing plate 50. The container-side member 61 is formed with a heater inserting hole 61 b for the heater 30. The heating portion 32 of the heater 30 is inserted through the heater inserting hole 61 b and is located inside the vaporizing chamber 25a. The body portion 31 of the heater 30 is installed in the heater inserting hole 61 b.

Both the heat-plate-side member 62 and the intermediate member 63 are formed into a ring shape. An outer circumferential surface of the cylindrical portion 41 is fit in a ring-shaped inner circumferential surface of the heat-plate-side member 62, whereas an inner circumferential surface of one end of the intermediated member 63 is fit to a ring-shaped outer circumferential surface of the heat-plate-side member 62. An inner circumferential surface of the other end of the intermediate member 63 is fit in a ring-shaped groove 61 c formed in the container-side member 61. A protrusion 41 a formed in the cylindrical portion 41 is fit in a depressed portion 51 a formed in the connecting portion 51. Due to these fittings, relative displacements between the heat-plate-side member 62, the intermediate member 63 and the cylindrical portion 41 in a direction perpendicular to the insertion direction (the horizontal direction in Fig. 5) of the heater 30 are prohibited.

The intermediate member 63 includes contact portions 63a, 63b. The contact portions 63a and 63b are respectively in contact with the container-side member 61 and the heat-plate-side member 62 in the insertion direction of the heater 30, i.e., a fastening direction of the binding member BT. Accordingly, the intermediate member 63 is held between the heat-plate-side member 62 and the container-side member 61. The heat-plate-side member 62 includes contact surfaces 41 b, 41 c. The contact surfaces 41 b are 41 c are respectively in contact with the heat-plate-side member 62 and the arm portion 52 in the fastening direction. Accordingly, the heat-plate-side member 62 is held between the intermediate member 63 and the cylindrical portion 41. Thus, the intermediate member 63, the heat-plate-side member 62 and the cylindrical portion 41 are interposed and held between the arm portion 52 of the mixing plate 50 and the container-side member 61 of the retaining member 60. It should be noted that, as explained above with reference to Fig. 8, the elastic member 40s and the heater 30 are inserted into the cylindrical portion 41 to be held.

The microcomputer 81 of the ECU 80 includes a memory unit to store programs, and a central processing unit executing an arithmetic processing according to the programs stored in the memory unit. The ECU 80 controls the operation of the internal combustion engine 10 based on detection values of sensors. The sensors may include an accelerator pedal sensor 91, an engine speed sensor 92, a throttle opening sensor 93, an intake air pressure sensor 94, an intake amount sensor 95, an exhaust temperature sensor 96, or the like.

The accelerator pedal sensor 91 detects a depressing amount of an accelerator pedal of a vehicle by a driver. The engine speed sensor 92 detects a rotational speed of an output shaft 10a of the internal combustion engine 10 (i.e., an engine rotational speed). The throttle opening sensor 93 detects an opening amount of the throttle valve 13. The intake air pressure sensor 94 detects a pressure of the intake passage 10in at a position downstream of the throttle valve 13. The intake amount sensor 95 detects the mass flow rate of intake air.

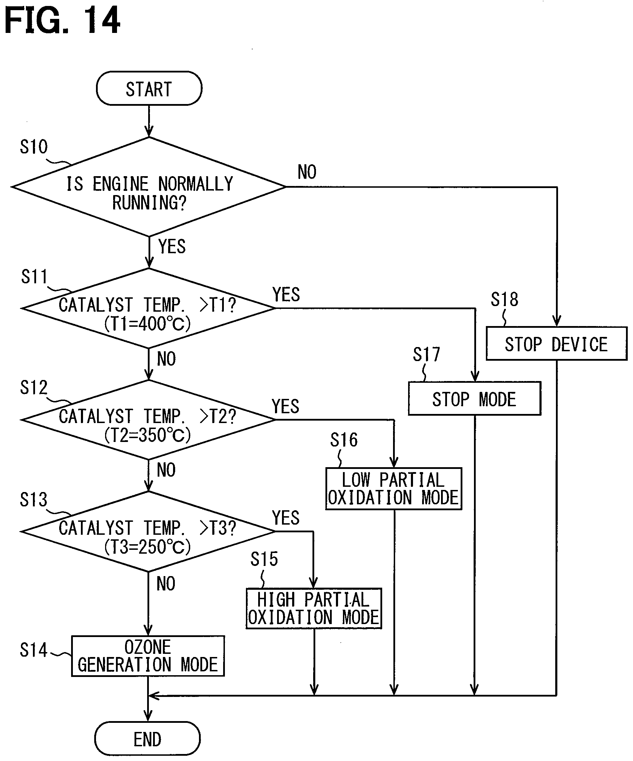

The ECU 80 generally controls an amount and injection timing of fuel for combustion that is injected from a fuel injection valve (not shown) according to a rotational speed of the output shaft 10a and an engine load of the internal combustion engine 10. Further, the ECU 80 controls the operation of the reducing agent supplying device based on an exhaust temperature detected by the exhaust temperature sensor 96. In other words, the microcomputer 81 switches between the generation of the reformed fuel and the generation of the ozone by repeatedly executing a process (i.e., a program) as shown in Fig. 14 at a predetermined period. The above process starts when an ignition switch is turned on and is constantly executed while the internal combustion engine 10 is running.

At Step 10 of Fig. 14, the microcomputer 81 determines whether the internal combustion engine 10 is running. When the internal combustion engine 10 is not running, the operation of the reducing agent supplying device is stopped at Step 18. More specifically, when electric power has been supplied to the discharging reactor 20, the air pump 20p, the fuel injector 70 and the heater 30, the electric power supply is stopped. In addition, when a temperature of the reducing catalyst (NOx catalyst temperature) is lower than the activation temperature and an amount of NOx adsorbed in the reducing catalyst (NOx adsorbed amount) is saturated, or when the NOx catalyst temperature is at a high temperature exceeding a reduction possible temperature range, the device is also stopped at Step 18.

When it is determined that the internal combustion engine 10 is running, the reducing agent supplying device is operated according to the NOx catalyst temperature in the NOx purifying device 15. Specifically, at Step 11, it is determined whether the NOx catalyst temperature is higher than a first specified temperature T1. When the NOx catalyst temperature is lower than the first specified temperature T1, it is determined whether the NOx catalyst temperature is higher than a second specified temperature T2 at Step 12. When the NOx catalyst temperature is lower than the second specified temperature T2, it is determined whether the NOx catalyst temperature is higher than an activation temperature T3 of the reducing catalyst at Step 13.

The first specified temperature T1 and the second specified temperature T2 are set to be higher than the activation temperature T3, and the first specified temperature T1 is set to be higher than the second specified temperature T2. For example, when the activation temperature T3 is 250°C, the first and second specified temperatures are set to 400°C and 350°C, respectively. The NOx catalyst temperature is estimated from an exhaust temperature detected by the exhaust temperature sensor 96. It should be noted that the activation temperature T3 of the reducing catalyst is the lowest temperature at which NOx can be reduced and purified in the existence of the reducing catalyst.

When it is determined that the NOx catalyst temperature is lower than the activation temperature T3 through Steps 11, 12 and 13, the reducing agent supplying device is operated in an ozone generation mode at Step 14. When it is determined that the NOx catalyst temperature is higher than the activation temperature T3 and lower than the second specified temperature T2, the reducing agent supplying device is operated in a high partial oxidation mode at Step 15. Whereas, it is determined that the NOx catalyst temperature is higher than the second specified temperature T2 and lower than the first specified temperature T1, the reducing agent supplying device is operated in a low partial oxidation mode at Step 16. Furthermore, it is determined that the NOx catalyst temperature is higher than the first specified temperature T1, the reducing agent supplying device is stopped in a stop mode at Step 17.

When the ozone generation mode is set at Step 14 in Fig. 14, the air pump 20p is operated with a predetermined power amount, and a predetermined power amount is supplied to the electrodes 21 of the discharging reactor 20 to start electric discharge. Next, power supply to the heater 30 is stopped, and power supply to the fuel injector 70 is stopped to stop fuel injection.

According to the ozone generation mode, the discharging reactor 20 generates ozone and the generated ozone is supplied into the exhaust passage 10ex through the air pipe 23 and the supply passage 26. In this case, if power supply to the heater 30 is implemented, the ozone would be heated by the heater 30 and then would collapse. Also, if fuel is supplied, the ozone inside the discharging reactor 20 would react with the supplied fuel. In view of these, in the ozone generation mode, heating by the heater 30 and the fuel supply by the fuel injector 70 are stopped. For that reason, since both the reaction of the ozone with the fuel and the heating collapse of the ozone can be avoided, the generated ozone is supplied into the exhaust passage 10ex as it is.

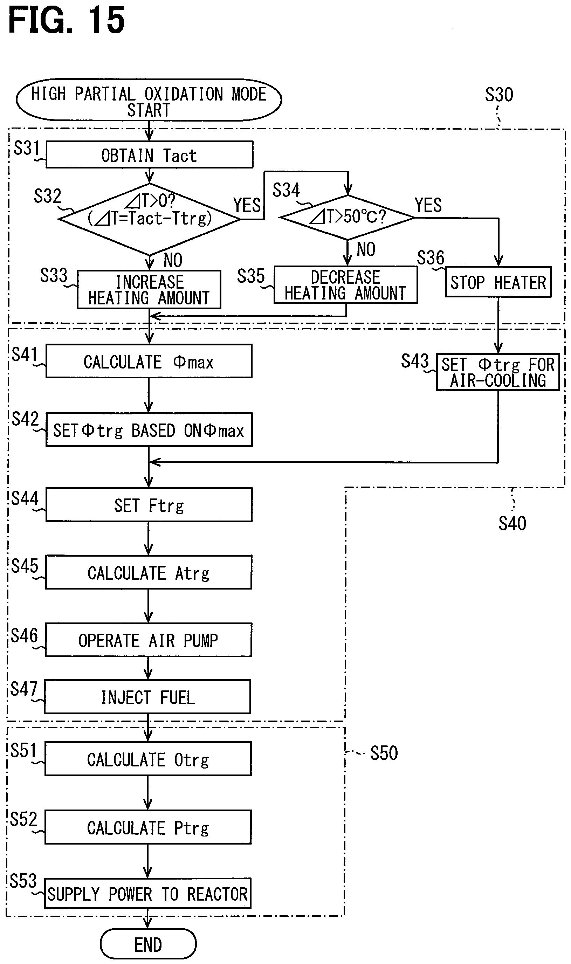

When the high partial oxidation mode is set at Step 15 of Fig. 14, the subroutine process of Fig. 15 will start.

An outline of the process in Fig. 15 will be described according to dashed lines in the figure. At Step 30, the operation of the heater 30 is controlled to adjust a temperature of the heat plate 40 within the specified temperature range. Basically, the specified temperature is set to be equal to or higher than a boiling point of fuel (e.g., 400°C or more). More specifically, the specified temperature range is set with respect to a fuel composition having the highest boiling point among a variety of fuel compositions contained in diesel fuel. Next, at Step 40, an equivalent ratio that is a ratio of fuel to air is adjusted to a value within the specified equivalent ratio range. The specified temperature range and the specified equivalent ratio range are included inside the two-step oxidation region indicated by the doted region in Fig. 13. Accordingly, the cool flame reaction occurs and the reformed fuel as described above is generated.

The lower limit of the specified temperature range is set to 260°C that is the boundary line between the one-step oxidation region and the non-reaction region and between the two-step oxidation region and the non-reaction region. The upper limit of the specified temperature range is set to the maximum temperature in a boundary line between the one-step oxidation region and the two-step oxidation region. The upper limit of the specified equivalent ratio range is set to a value that is a maximum value in the boundary line between the one-step oxidation region and the two-step oxidation region and that corresponds to 370°C

Further, at Step 50, the power supply to the discharging reactor 20 is controlled according to a concentration of fuel on the guide surface 53a. Accordingly, ozone is generated, and the generated ozone is supplied into the vaporizing container 25. Thus, the start timing of the cool flame reaction is advanced, and the cool flame reaction time is reduced. Hence, even when the vaporizing container 25 is downsized so that a staying time on the guide surface 53a is decreased, the cool flame reaction can be completed within the staying time, whereby the vaporizing container 25 can be downsized.

The discharging reactor 20 and the air pump 20p may serve as "ozone supplier" that supplies ozone into vaporized fuel as a reducing agent and reforms the reducing agent under an ozone-present atmosphere. The microcomputer 81 executing Step 30 may serve as "temperature adjusting portion" that controls a temperature of the heat plate 40 to adjust a temperature inside the vaporizing chamber 25a to be a specified temperature range. The microcomputer 81 executing Step 40 may serve as "equivalent ratio controller" that adjusts an equivalent ratio, which is a ratio of fuel and air supplied into the vaporizing chamber 25a, to be within the specified equivalent ratio range. The microcomputer 81 executing Step 50 may serve as "ozone controller" that controls the ozone supplier to supply ozone when a temperature of the reducing catalyst is lower than the second specified temperature T2.

Next, the process at Step 30, 40, 50 will be further described in detail with reference to Fig. 15.

First, the process of the temperature controller at Step 30 will be described. At Step 31, a detection temperature (i.e., a temperature of the heat plate 40) by the temperature sensor 42t is obtained and an ambient temperature in the vaporizing chamber 25a (i.e., the exposure temperature) is estimated based on the obtained detection temperature. Hereinafter, the ambient temperature estimated based on the detection temperature is referred to as "detection temperature Tact". At subsequent Step 32, it is determined whether the detection temperature Tact is higher than a predetermined target temperature Ttrg. More specifically, it is determined whether a difference ΔT obtained by subtracting the target temperature Ttrg from the detection temperature Tact is greater than zero.

When ΔT>0 is not satisfied, the process proceeds to Step 33, and a heating amount by the heater 30 is increased. Specifically, an energizing duty ratio to the heater 30 is increased as the absolute value of the difference ΔT increases. Whereas, when ΔT>0 is satisfied, it is determined whether the difference ΔT exceeds a maximum value (e.g., 50°C) at Step 34. When the difference ΔT does not exceed the maximum value, the process proceeds to Step 35, and a heating amount by the heater 30 is decreased. Specifically, the energizing duty ratio to the heater 30 is decreased as the absolute value of the difference ΔT increases. However, when the difference ΔT exceeds the maximum value, the process proceeds to Step 36, and the electric supply to the heater 30 is stopped. Therefore, the ambient temperature can be rapidly decreased. It should be noted that the target temperature Ttrg used at Step 32 is set to be the ambient temperature (e.g., 370°C) at which the equivalent ratio has the maximum value in the two-step oxidation reaction region illustrated in Fig. 13.

Next, a process by the equivalent ratio controller at Step 40 will be described below. At Step 40, when the difference ΔT is equal to or less than 50°C, the process proceeds to Step 41, and a maximum value ϕmax of the equivalent ratio, which corresponds to the detection temperature Tact, and at which the cool flame reaction occurs, is calculated. More specifically, the maximum value ϕmax of the equivalent ratio corresponding to the ambient temperature in the two-step oxidation region, or a value obtained by subtracting a given margin from the maximum value ϕmax is stored in the microcomputer 81 as a target equivalent ratio ϕtrg. For example, a map for the maximum value ϕmax of the equivalent ratio corresponding to the ambient temperature in the two-step oxidation region is prepared and the map is stored in the microcomputer 81 in advance. Then, the maximum value ϕmax of the equivalent ratio corresponding to the detection temperature Tact is calculated using the map.

At Step 42, the target equivalent ratio ϕtrg is set based on the maximum value ϕmax of the equivalent ratio calculated at Step 41. More specifically, the target equivalent ratio ϕtrg is set by subtracting a given margin from the maximum value ϕmax. Accordingly, even when an actual equivalent ratio is greater than the target equivalent ratio ϕtrg, the actual equivalent ratio less likely exceeds the maximum value ϕmax, and thus the likelihood of occurrence of the hot flame reaction beyond the cool flame reaction can be decreased.

Whereas, when the difference ΔT is greater than 50°C and the heater 30 is stopped at Step 36, the process proceeds to Step 43, and the target equivalent ratio ϕtrg is set to a predetermined value for air-cooling. The predetermined value for air-cooling is set to be lower than the maximum value ϕmax of the equivalent ratio corresponding to the target temperature Ttrg. In other words, a decrease in the ambient temperature can be accelerated by increasing a flow amount of air compared to the case of Step 42.

At Step 44, a target fuel flow rate Ftrg is set. The target fuel flow rate Ftrg is a flow rate of fuel to appropriately supply a necessary fuel amount in order to fully reduce NOx that flows into the NOx purifying device 15. The target fuel flow rate Ftrg means the mass of fuel that is supplied into the NOx purifying device 15 per unit time.

Specifically, the target fuel flow rate Ftrg is set based on an NOx inflow rate that will be described below, and the NOx catalyst temperature. The NOx inflow rate is the mass of NOx that flows into the NOx purifying device 15 per unit time. For example, the NOx inflow rate can be estimated based on an operating condition of the internal combustion engine 10. The NOx catalyst temperature is a temperature of the reducing catalyst inside the NOx purifying device 15. For example, the NOx catalyst temperature can be estimated based on a temperature detected by the exhaust temperature sensor 96.

The target fuel flow rate Ftrg increases as the NOx inflow rate increases. Also, since a reduced amount (reducing performance) of NOx in the presence of the reducing catalyst varies according to the NOx catalyst temperature, the target fuel flow rate Ftrg is set according to a difference in the reducing performance due to the NOx catalyst temperature.

At subsequent Step 45, a target air flow rate Atrg is calculated based on the target equivalent ratio φtrg set at Step 42 or Step 43, and the target fuel flow rate Ftrg set at Step 44. Specifically, the target air flow rate Atrg is so calculated as to meet φtrg=Ftrg/Atrg.

In subsequent Step 46, the operation of the air pump 20p is controlled based on the target air flow rate Atrg calculated at Step 45. Specifically, the energizing duty ratio to the air pump 20p increases as the target air flow rate Atrg increases. Next, at Step 47, the operation of the fuel injector 70 is controlled to execute fuel injection based on the target fuel flow rate Ftrg set at Step 44. Specifically, the opening time of the fuel injector 70 is increased as the target fuel flow rate Ftrg increases. Alternatively, the interval from the stop timing of a fuel injection this time to the start timing of a fuel injection next time may be shortened.

Then, a description will be given of the process of Step 50 by the discharging power controller. Initially, a target ozone flow rate Otrg is calculated at Step 51 based on the target fuel flow rate Ftrg set at Step 44. Specifically, the target ozone flow rate Otrg is calculated so that a ratio of an ozone concentration to a fuel concentration on the guide surface 53a becomes a given value (for example, 0.2). For example, the ratio is set so that the cool flame reaction can be completed within a given time (for example, 0.02 sec). Furthermore, at Step 51, the target ozone flow rate Otrg is set to be increased as the NOx catalyst temperature decreases.

In subsequent Step 52, a target energizing amount Ptrg to the discharging reactor 20 is calculated based on the target air flow rate Atrg calculated at Step 45 and the target ozone flow rate Otrg calculated at Step S51. The staying time of air inside the discharging passage 21 a decreases as the target air flow rate Atrg increases. Therefore, the target energizing amount Ptrg is increased as the target air flow rate Atrg increases. Further, target energizing amount Ptrg is increased as the target ozone flow rate Otrg increases. Next, at Step 53, the energizing amount to the discharging reactor 20 is controlled based on the target energizing amount Ptrg calculated at Step 52. Specifically, the energizing duty ratio to the discharging reactor 20 increases as the target energizing amount Ptrg increases. Alternatively, the interval from the stop timing of energizing in this time from the start timing of energizing in next time is shortened.

According to the high partial oxidation mode shown in Fig. 15, ozone generated at the discharging reactor 20, oxygen in air, and fuel vaporized by the heater 30 are mixed with each other on the guide surface 53a and then the fuel is partially oxidized under the ozone-present environment. On the other hand, in the low partial oxidation mode at Step 16 of in Fig. 14, the generation of ozone is stopped, and fuel vaporized by the heater 30 and oxygen in air are mixed with each other on the guide surface 53a and then fuel is partially oxidized under a non-ozone-present environment.

More specifically, during the low partial oxidation mode, the process similar to the processes of Steps 30 and 40 of Fig. 15 is executed, whereas the process at Step 50 of Fig. 15 is eliminated. In short, the ambient temperature is adjusted within the specified temperature range at Step 30 and the equivalent ratio is adjusted within the specified equivalent ratio range at Step 40. However, the ozone generation of Step 50 in Fig. 15 is not executed and power supply to the discharging reactor 20 is stopped.

Whereas, when the stop mode is set at Step 17 of Fig. 14, while the process similar to Step 30 of Fig. 15 is executed, the processes at Steps 40 and 50 of Fig. 15 are eliminated. In short, the ambient temperature is adjusted to be within the specified temperature range at Step 30. However, the equivalent ratio adjustment at Step 40 and the ozone generation at Step 50 in Fig. 15 are not executed and power supply to the discharging reactor 20 is stopped. Further, the operation of the air pump 20p is stopped and air supply (oxygen supply) to the vaporizing chamber 25a and the guide surface 53a is stopped. However, fuel supply into the vaporizing chamber 25a is executed to vaporize fuel by the heater 30. Accordingly, the vaporized fuel without being partially oxidized with oxygen or ozone is supplied into the exhaust passage 10ex.

Aside from the process of Fig. 14, when it is determined that deposits of fuel on the heat plate 40 are accumulated with a specified amount or more, a deposit removal control will executed. In the deposit removal control, a temperature of the heat plate 40 is increased to a temperature (e.g., 600°C) higher than a combustion temperature of the deposits at which the deposits are combusted. For example, the microcomputer 81 estimates that the deposits is accumulated with the specified amount or more, when a fuel injection amount from the injector 70 has reached to a predetermined value since the deposit removal control was previously executed. Alternatively, the deposit removal control is executed each time a traveling distance of a vehicle reaches to a predetermined distance.

The heat plate 40 and the elastic member 40s are made of material having heat-resistance to such a high temperature during the deposit removal control. Especially, the elastic member 40s is made of material that can exhibit elasticity even under the high temperature environment. The specific example of the material may be a nickel-and-chrome base alloy.

According to the present embodiment, since the heater 30 is disposed in the vaporizing chamber 25a that branches off from the air passage 23b, it is possible to suppress the heater 30 to be cooled by air flowing through the air passage 23b. Thus, loss of heat to be used for reforming fuel can be suppressed. However, when the vaporizing chamber 25a is disposed by branching off from the air passage 23b, there may be concern that the mixing quality of vaporized fuel and air would be deteriorated.

To address the concern, the mixing plate 50 is disposed to extend into the air passage 23b from the vaporizing chamber 25a in the present embodiment. Thus, vaporized fuel heated in the vaporizing chamber 25a is guided into the air passage 23b by the mixing plate 50. Further, air flowing through the air passage 23b collides with the distal end 53b of the mixing plate 50, which is located inside the air passage 23b, and then the air is mixed with the vaporized fuel guided by the mixing plate 50. Accordingly, the above-described concern can be reduced by providing the mixing plate 50 while the heat loss can be suppressed by disposing the heater 30 in the vaporizing chamber 25a that branches off from the air passage 23b.

According to the present embodiment, the heating member includes the heat plate 40, onto which liquid fuel injected from the injector 70 is splayed, and the heater 30, which heats the heat plate 40, and the mixing plate 50 is connected to the heat plate 40.

Thus, the liquid fuel that was sprayed onto the heat plate 40 directly receives heat from the heat plate 40. Thus, fuel can be rapidly vaporized compared to the case where the liquid fuel does not collide with the heat plate 40 and receives heat at an inside space of the vaporizing chamber 25a. In addition, the heat plate 40 for directly providing the liquid fuel with heat is disposed at a position outside of the air passage 23b. Thus, the heat plate 40 can be suppressed to be cooled by air flowing through the air passage 23b, thereby reducing the heat loss at the heat plate 40.

The liquid fuel splashes and is splattered from the heat plate 40 after colliding with the heat plate 40. Thus, the size of each drop of the splashing fuel becomes very small, whereby the splashing fuel floats a region around the heat plate 40. As a result, the quantity of heat, which the splashing liquid fuel receives, can increase, and thus the vaporizing of the fuel and the cracking are accelerated.

Furthermore, the mixing plate 50 is made of material having lower thermal conductivity than that of the heat plate 40. Thus, heat loss at the mixing plate 50, which is disposed in the air passage 23b, by air flowing through the air passage 23b can be suppressed. As a result, heat loss suppression effects can be accelerated.

When the mixing plate 50 is made of metal that is different from metal of the heat plate 40 (i.e., different metals), there may be a concern that severe corrosion (i.e., potential difference corrosion) would be generated at a contact portion of one of the different metals. To address the concern, the mixing plate 50 is made of stainless steel and the heat plate 40 is made of the copper, in the present embodiment. Since the potential difference corrosion less likely generates in the combination of stainless steel and copper, the potential difference corrosion can be suppressed between the mixing plate 50 and the heat plate 40, while the mixing plate 50 having lower thermal conductivity than the heat plate 40.

Furthermore, the elastic member 40s is disposed between the heater 30 and the heat plate 40, and the elastic member 40s is in contact with the heater 30 and the heat plate 40 while being elastically deformed. Therefore, the contact between the heater 30 and the elastic member 40s and the contact between the heat plate 40 and the elastic member 40s can be surely attained. As a result, heat transfer from the heater 30 to the heat plate 40 through the elastic member 40s can be surely achieved. Especially, even when thermal deformation in the heat plate 40, such as thermal expansion or thermal shrinking, according to a temperature of the heat plate 40 occurs, the above-described contacts are surely achieved by the elastic member 40s, whereby the heat transfer can be surely attained.

The elastic member 40s is made of material that exhibits elasticity even when a temperature of the heat plate 40 is increased to the combustion temperature for the deposits on the heat plate 40. Thus, the elastic member 40s exhibits elasticity at the combustion temperature of the deposits that is much higher than the boiling point of fuel, thereby enabling the deposit removal control to be executed.

Furthermore, the retaining member 60, which is attached to the vaporizing container 25, and the binding member BT, which binds the retaining member 60 to the mixing plate 50, are provided. The heat plate 40 is held while being interposed between the retaining member 60 and the mixing plate 50. Accordingly, one end of the heat plate 40 is supported by the retaining member 60 and the other end of the heat plate 40 is supported by the mixing plate 50. That is, both ends of the heat plate 40 extending in the insertion direction of the heater 30 are supported. Thus, the heater 30 can be firmly supported compared to a case where only one end of the heat plate 40 is supported (i.e., the heat plate 40 is cantilevered).

In addition, the retaining member 60, the container-side member 61, the heat-plate-side member 62 and the intermediate member 63 are provided in the present embodiment. The container-side member 61 and the heat-plate-side member 62 are made of metal, and the intermediate member 63 is made of material (more specifically, ceramic) having lower thermal conductivity than that of the members 61, 62. Thus, since the retaining member 60 includes the intermediate member 63 having low thermal conductivity, it is possible to suppress heat to be transferred from the heat plate 40 to the vaporizing container 25 through the retaining member 60. Further, the container-side member 61 and the heat-plate-side member 62 made of metal are provided. Hence, it is possible to easily machine the retaining member 60 into a suitable shape to be attached to the vaporizing container 25 and the cylindrical portion 41. The suitable shape to be attached includes, e.g., a shape fit to the contact surface 41 b or a shape having the inserting hole 61 a.

Furthermore, the heat-plate-side member 62 is made of stainless steel and the heat plate 40 is made of copper. Since stainless steel has lower thermal conductivity than copper, it is possible to suppress heat to be transferred from the heat plate 40 to the vaporizing container 25 through the retaining member 60. Furthermore, since the heat plate 40 is made of copper, high heat transfer from the heater 30 to the heat plate 40 can be secured. Thus, supply power amount to the heater 30, which is necessary to increase a temperature of the heater 40 to a target temperature, can be reduced. Furthermore, the above-described potential difference corrosion between stainless steel and copper is less likely to be generated. Hence, since the heat plate-side member 62 is made of stainless steel and the heat plate 40 is made of copper in the present embodiment, the likelihood for generating the potential difference corrosion on one of the heat-plate-side member 62 and the heat plate 40 can be suppressed.

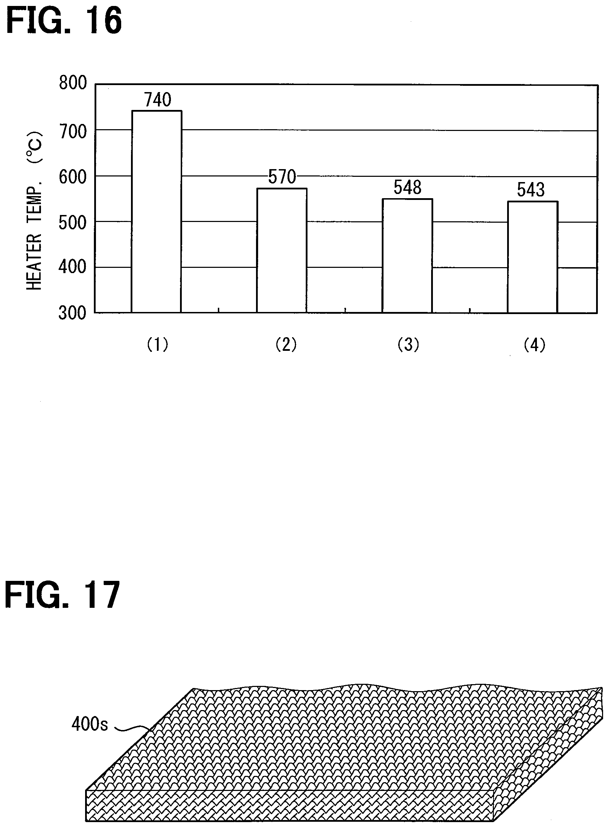

Fig. 16 shows a simulation result indicating reduction effects for power consumption due to the selection of materials for the above-described members. In this simulation, a temperature of the heater 30, which was required to increase a temperature of the heat plate 40 to 400°C, was analyzed. The condition (4) indicated in the horizontal axis corresponds to the case where the same materials are selected as the present embodiment as described above. As indicated by the condition (4), when a temperature of the heater 30 is set to be 543°C, the heat plate 40 can reach at 400°C. In the condition (4), stainless steel is used for the container-side member 61, the heat-plate-side member 62, the mixing plate 50 and the binding member BT, copper is used for the heat plate 40, and ceramic is used for the intermediate member 63.

The condition (3) is changed from the condition (4) in that the heat-plate-side member 62, which is made of stainless steel in the condition (4), is made of copper. The condition (2) is changed from the condition (3) in that the mixing plate 50, which is made of stainless steel in the condition (3), is made of copper. The condition (1) is changed from the condition (2) in that the intermediate member 63, which is made of ceramic in the condition (2), is made of stainless steel. As indicated in Fig. 16, a higher temperature is required for the heater 30 in the order of the condition (1), (2), (3), (4). From the result indicated in Fig. 16, according to the present embodiment having the condition (4), it is confirmed that heat transfer from the heat plate 40 to the vaporizing container 25 through the retaining member 60 is suppressed, whereby power consumption at the heater 30 can be reduced.

The NOx purification rate will vary according to the NOx catalyst temperature when the reducing agent is supplied under either of the high partial oxidation mode, the low partial oxidation mode, and the stop mode. In all modes, there exists a catalyst temperature (peak temperature) at which the purification rate has a maximum value. However, the peak temperature of each mode has a different value. In short, the peak temperature for the high partial oxidation mode is lower than the peak temperature for the low partial oxidation mode, and the peak temperature for the low partial oxidation mode is lower than the peak temperature for the stop mode. The maximum value of the purification rate at the peak temperature for the high partial oxidation mode has the highest value, and then the maximum value of the purification rate for the low partial oxidation mode has the second highest value. The maximum value of the purification rate for the stop mode has the lowest value.

However, in a temperature range higher than a temperature indicated by a first boundary temperature, the purification rate for the stop mode is higher than the purification rate for the low partial oxidation mode. Further, in a temperature range higher than a second boundary temperature, the purification rate for the low partial oxidation mode is higher than the purification rate for the high partial oxidation mode. The second boundary temperature is lower than the first boundary temperature. According to study by the inventors of the present disclosure, such a reversal phenomenon for the value of the purification rate can be explained as below.

In the temperature range higher than the first boundary temperature, a portion of the reformed fuel that was partially oxidized is fully oxidized before reducing NOx, and is decomposed (oxidative deterioration) into carbon dioxide and water, thereby losing the capacity to reduce NOx. For this reason, the purification rate is rather increased in such a temperature range when the reformation by the partial oxidation is stopped. Similarly, in the temperature range higher than the second boundary temperature, the reformed fuel loses the reducing capacity for NOx through the oxidative deterioration. The degree of the oxidative deterioration will increase as the catalyst temperature increases. Therefore, it can be also said that the purification rate is rather increased in such a temperature range when the reformation by the partial oxidation is stopped. On the contrary, at a temperature range lower than the second boundary temperature, the above oxidative deterioration almost does not occur, even when the partial oxidation is accelerated by supplying ozone. Therefore, the purification rate can increase in the temperature range lower than the second boundary temperature by supplying ozone.

Based on the above-described finding, the first specified temperature T1 used for determining the mode in Fig. 14 is set based on the first boundary temperature. Specifically, the first specified temperature T1 is set to the first boundary temperature or a temperature within a specified range including the first boundary temperature. Then, if the reducing catalyst temperature is higher than the first specified temperature T1, the operation mode is switched to the stop mode and the reformation of fuel is stopped. Thus, when, for example, the catalyst temperature rises from a temperature range lower than the first boundary temperature to a temperature range higher than the first boundary temperature, the operation mode is switched from the low partial oxidation mode to the stop mode. Therefore, it may be possible to suppress a situation where partially oxidized fuel is fully oxidized and loses the NOx reducing capacity. Hence, the purification rate can be improved.

Furthermore, the ozone supplier and the ozone controller are provided in the present embodiment. The ozone supplier supplies ozone to the reducing agent and reforms the reducing agent under the ozone-present environment. The ozone controller controls the ozone supplier to supply ozone when the reducing catalyst temperature is lower than the second specified temperature T2 that is set to be equal to or higher than the activation temperature and lower than the first specified temperature T1. Accordingly, when, for example, the catalyst temperature rises to a temperature range higher than the second specified temperature T2 from a temperature range lower than the second specified temperature T2, the operation mode is switched from the high partial oxidation mode to the low partial oxidation mode. Thus, it may be possible to suppress a situation where partially oxidized fuel is fully oxidized and loses the NOx reducing capacity. Therefore, the purification rate can be improved.

Furthermore, the ozone controller controls the ozone supplier to increase a supply amount of ozone as the catalyst temperature decreases during the high partial oxidation mode. The risk that fuel partially oxidized is fully oxidized and loses the NOx reducing capacity will decrease as the catalyst temperature decreases. Hence, according to the present embodiment where the supply amount of ozone is increased as the catalyst temperature decreases, the partial oxidation by ozone can be accelerated under such a condition where the above described risk is suppressed.

According to the present embodiment, a temperature and the equivalent ratio are adjusted to generate the cool flame reaction, and the fuel (reformed fuel) partially oxidized through the cool flame reaction is supplied into the exhaust passage 10ex as the NOx purifying reducing agent. Thus, the NOx purification rate can be improved as compared with a case in which fuel not partially oxidized is used as the reducing agent.

Further, in the present embodiment, the discharging reactor 20 is provided, and ozone generated by the discharging reactor 20 is supplied into the vaporizing container 25 when the cool flame reaction is generated. For that reason, the start timing of the cool flame reaction can be advanced, and the cool flame reaction time can be reduced. Hence, even when the vaporizing container 25 is downsized, and a staying time of the fuel within the vaporizing container 25 is shortened, the cool flame reaction can be completed within the staying time. Thus, the vaporizing container 25 can be downsized.

Further, in the present embodiment, when a temperature of the reducing catalyst is lower than the activation temperature T3, ozone generated by the discharging reactor 20 is supplied into the air passage 23b while stopping fuel injection by the fuel injector 70, thereby supplying the ozone into the exhaust passage 10ex. Accordingly, the reformed fuel as the reducing agent can be prevented from being supplied when the reducing catalyst in the NOx purifying device 15 is not activated. Since NO in the exhaust gas is oxidized into NO₂ by supplying ozone, and is adsorbed inside the NOx purification catalyst, an NOx adsorption amount inside the NOx purifying device 15 can increase.

Further, according to the present embodiment, the cracking is generated by the heater 30 to thermally decompose fuel into a hydrocarbon compound having a small carbon number. Since the hydrocarbon compound having a small carbon number has a low boiling point, vaporized fuel can be suppressed to return to liquid form.

### (Second Embodiment)

In the first embodiment, the elastic member 40s is formed by curving the plate member having a wave form as shown in Fig. 10. Alternatively, as shown in Fig. 17, an elastic member 400s may be formed of a mesh member that is formed by weaving wires having elasticity. The elastic member 400s is disposed between the heater 30 and the heat plate 40, and the elastic member 400s is in contact with the heater 30 and the heat plate 40 while being elastically deformed.

As with the elastic member 40s illustrated in Fig. 10, the contact between the heater 30 and the elastic member 400s or the second embodiment and the contact between the heat plate 40 and the elastic member 400s can be secured. Thus, even when the heat plate 40 is thermally deformed, the above-contacts can be surely achieved by the elastic member 400s, whereby heat can be surely transferred from the heater 30 to the heat plate 40.

### (Other Embodiments)

In the embodiment as shown in Fig. 5, the heater plate 40 is attached to the heating portion 32 of the heater 30 and liquid fuel collides with the heat plate 40. However, the heat plate 40 may be eliminated and liquid fuel may directly collide with the heating portion 32 of the heater 30. Further, in place of the collision of liquid fuel, liquid fuel that was injected from the injector 70 may be vaporized when the liquid fuel floats inside the vaporizing chamber 25a.

In the embodiment as shown in Fig. 2, the mixing plate 50 is connected to the heat plate 40. However, the mixing plate 50 may be connected to, e.g., the hater 30.

In the embodiments as illustrated in Figs. 8 and 17, the elastic member 40s, 400s is disposed between the heater 30 and the heat plate 40. On the contrary, metal powder may be filled inside a space between the heater 30 and the heat plate 40 and heat may be transferred from the heater 30 to the heat plate 40 through the metal powder.

In the embodiment shown in Fig. 5, the heat plate 40 is held by the retaining member 60 and the mixing plate 50 while being interposed therebetween, whereby both ends of the heat plate 40 are supported. Alternatively, the binding member BT may be eliminated and one end of the heat plate 40 may be fixed to the retaining member 60, i.e., a cantilevered structure may be used.

In the embodiment shown in Fig. 1, the material of the condition (4) in Fig. 16 is selected, but the material of the condition (1), (2) or (3) may be selected.

In the embodiment shown in Fig. 8, the temperature sensor 42t is inserted into the inserting hole 42b and is attached to the heat plate 40. However, the temperature sensor 42t may be disposed so as to be exposed into the vaporizing chamber 25a.

In the embodiment shown in Fig. 1, air is supplied into the discharging reactor 20 by the air pump 20p. On the contrary, a portion of intake air in the internal combustion engine 10 is supplied into the discharging reactor 20 through a bypassing route. Specifically, high temperature intake air without being cooled by the cooler 12 may branch off toward the discharging reactor 20 or low temperature intake air after being cooled by the cooler 12 may branch off toward the discharging reactor 20.

In the embodiment shown in Fig. 1, ozone is generated by the discharging reactor 20 and the generated ozone is supplied into the air passage 23b. Alternatively, the discharging reactor 20 and the high partial oxidation mode may be eliminated, and the operation mode may change between the partial oxidation mode and the stop mode. According to the configuration, since the discharging reactor 20 is eliminated, downsizing of the device can be achieved.

In the above-described embodiment as shown in Fig. 1, the reducing catalyst that physically adsorbs NOx (i.e., physisorption) is used in the NOx purifying device 15, but a reducing agent that chemically adsorbs NOx (i.e., chemisorption) may be used.

The NOx purifying device 15 may adsorb NOx when an air-fuel ratio in the internal combustion engine 10 is leaner than a stoichiometric air-fuel ratio (i.e., when the engine 10 is in lean combustion) and may reduce NOx when the air-fuel ratio in the internal combustion engine 10 is not leaner than the stoichiometric air-fuel ratio (i.e., when the engine 10 is in non-lean combustion). In this case, ozone is generated at the lean combustion and the reformed fuel is generated at the non-lean combustion. One example of a catalyst that adsorbs NOx at the lean combustion may be a chemisorption reducing catalyst made of platinum and barium carried by a carrier.

The reducing agent supplying device may be applied to a combustion system that has the NOx purifying device 15 without adsorption function (i.e., physisorption and chemisorption functions). In this case, in the NOx purifying device 15, an iron-based or copper-based catalyst may be used as the catalyst having the NOx reducing performance in a given specified temperature range in the lean combustion, and the reformed fuel may be supplied to those catalysts as the reducing agent.

In the above-described embodiment, the NOx catalyst temperature used at Steps 11, 12 and 13 of Fig. 14 is estimated based on the exhaust temperature detected by the exhaust temperature sensor 96. However, a temperature sensor may be attached to the NOx purifying device 15, and the temperature sensor may detect directly the NOx catalyst temperature. Alternativley, the NOx catalyst temperature may be estimated based on a rotational speed of the output shaft 10a and an engine load of the internal combustion engine 10.

In the above-described embodiment as shown in Fig. 1, the discharging reactor 20 has the electrodes 21, each of which has a plate shape and faces each other in parallel. However, the discharging reactor 20 may have an acicular electrode (pin electrode) protruding in an acicular manner and an annular electrode annularly surrounding the acicular electrode.

In the above-described embodiment as shown in Fig. 1, fuel (diesel fuel) is used as the reducing agent. However, urea may be injected from the injector 70 and ammonia may be supplied into the exhaust passage 10ex from the supply passage 26. In the above-described embodiment as shown in Fig. 1, the reducing agent supplying device is applied to the combustion system that is installed in a vehicle. However, the active substance supplying system may be applied to a stationary combustion system. Further, in the embodiment as shown in Fig. 1, the reducing agent supplying device is applied to a compression self-ignition diesel engine, and diesel for combustion is used as the reducing agent. However, the reducing agent supplying device may be applied to a self-ignition gasoline engine, and gasoline for combustion may also be used for the reducing agent.

Means and functions provided by the microcomputer may be provided by, for example, only software, only hardware, or a combination thereof. The microcomputer may be constituted by, for example, an analog circuit.

## Claims

1. A reducing agent supplying device for a fuel combustion system that includes a NOx purifying device (15) with a reducing catalyst arranged in an exhaust passage (10ex) to purify NOx contained in exhaust gas of an internal combustion engine (10), the reducing agent supplying device supplying a reducing agent into the exhaust passage (10ex) at a position upstream of the reducing catalyst, the reducing agent supplying device comprising:
an air pipe (23) that defines an air passage (23b) therein;
a vaporizing container (25) that is connected to the air pipe (23), the vaporizing container (25) defining a vaporizing chamber (25a) therein that branches off from the air passage (23b);
an injector (70) that injects liquid hydrocarbon compound as a reducing agent;
a heating member (30, 40) that is disposed inside the vaporizing chamber (25a), the heating member (30, 40) heating and vaporizing the reducing agent injected from the injector (70); and
a mixing plate (50) that is connected to the heating member (30, 40), the mixing plate (50) extending from the vaporizing chamber (25a) into the air passage (23b).

2. The reducing agent supplying device according to claim 1, wherein
the heating member (30, 40) includes a heat plate (40), onto which the reducing agent in liquid form injected from the injector (70) is sprayed, and a heater (30) that heats the heat plate (40), and
the mixing plate (50) is connected to the heat plate (40).

3. The reducing agent supplying device according to claim 2, wherein
the mixing plate (50) is formed of material having lower thermal conductivity than
the heat plate (40).

4. The reducing agent supplying device according to claim 3, wherein
the mixing plate (50) is made of stainless steel and the heat plate (40) is made of copper.

5. The reducing agent supplying device according to any one of claims 2 to 4, further comprising
an elastic member (40s, 400s) that is disposed between the heater (30) and the heat plate (40), wherein
the elastic member (40s, 400s) is in contact with the heater (30) and the heat plate (40) while being elastically deformed.

6. The reducing agent supplying device according to claim 5, wherein
the elastic member (40s, 400s) is made of a material that exhibits elasticity even when a temperature of the heat plate (40) increases to a temperature at which a deposit on the heat plate (40) is combusted.

7. The reducing agent supplying device according to any one of claims 2 to 6, further comprising
a retaining member (60) that is attached to the vaporizing container (25), and
a binding member (BT) that binds the retaining member (60) to the mixing plate (50), wherein
the heat plate (40) is held by being interposed between the retaining member (60) and the mixing plate (50).

8. The reducing agent supplying device according to claim 7, wherein
the retaining member (60) includes a first portion (61) that is attached to the vaporizing container (25), a second portion (62) that is in contact with, and holds, the heat plate (40), and an intermediate portion (63) that is interposed between the first portion (61) and the second portion (62),
the first portion (61) and the second portion (62) are made of metal, and
the intermediate portion (63) is made of a material having lower thermal conductivity than the first portion (61) and the second portion (62).

9. The reducing agent supplying device according to claim 8, wherein
the second portion (62) is made of stainless steel, and
the heat plate (40) is made of copper.

## Patentansprüche

1. Reduktionsmittel-Zuführvorrichtung für ein Brennstoffverbrennungssystem, das eine NOx-Reinigungsvornchtung (15) mit einem in einer Abgasleitung (10ex) angeordneten Reduktionskatalysator zum Reinigen von NOx, das in einem Abgas einer Verbrennungsmaschine (10) enthalten ist, beinhaltet, wobei die Reduktionsmittel-Zuführvornchtung ein Reduktionsmittel in die Abgasleitung (10ex) an einer Position stromauf des Reduktionskatalysators zuführt, wobei die Reduktionsmittel-Zuführvorrichtung aufweist:
eine Luftrohrleitung (23), die eine Luftleitung (23b) darin definiert;
einen Verdampfungsbehälter (25), der mit der Luftrohrleitung (23) verbunden ist, wobei der Verdampfungsbehälter (25) eine Verdampfungskammer (25a) darin definiert, die von der Luftleitung (23b) abzweigt;
einen Injektor (70), der eine flüssige Kohlenwasserstoffverbindung als ein Reduktionsmittel einspritzt;
ein Heizelement (30, 40), das im Inneren der Verdampfungskammer (25a) angeordnet ist, wobei das Heizelement (30, 40) das Reduktionsmittel, das von dem Injektor (70) eingespritzt wird, erwärmt und verdampft; und
eine Mischplatte (50), die mit dem Heizelement (30, 40) verbunden ist, wobei die Mischplatte (50) sich von der Verdampfungskammer (25a) in die Luftleitung (23b) erstreckt.

2. Reduktionsmittel-Zuführvorrichtung nach Anspruch 1, wobei
das Heizelement (30, 40) eine Heizplatte (40), auf die das von dem Injektor (70) injizierte Reduktionsmittel in flüssiger Form gesprüht wird, und eine Heizeinrichtung (30) beinhaltet, die die Heizplatte (40) erwärmt, und
die Mischplatte (50) mit der Heizplatte (40) verbunden ist.

3. Reduktionsmittel-Zuführvorrichtung nach Anspruch 2, wobei
die Mischplatte (50) aus einem Material mit einer geringeren Wärmeleitfähigkeit als die Heizplatte (40) ausgebildet ist.

4. Reduktionsmittel-Zuführvorrichtung nach Anspruch 3, wobei
die Mischplatte (50) aus rostfreiem Stahl hergestellt ist und die Heizplatte (40) aus Kupfer hergestellt ist.

5. Reduktionsmittel-Zuführvorrichtung nach einem der Ansprüche 2 bis 4, ferner aufweisend
ein elastisches Element (40s, 400s), das zwischen der Heizeinrichtung (30) und der Heizplatte (40) angeordnet ist, wobei
das elastische Element (40s, 400 s) mit der Heizeinrichtung (30) und der Heizplatte (40) in Kontakt ist, während es elastisch verformt wird.

6. Reduktionsmittel-Zuführvorrichtung nach Anspruch 5, wobei
das elastische Element (40s, 400s) aus einem Material hergestellt ist, das eine Elastizität aufweist, selbst wenn eine Temperatur der Heizplatte (40) auf eine Temperatur ansteigt, bei der eine Ablagerung auf der Heizplatte (40) verbrannt wird.

7. Reduktionsmittel-Zuführvorrichtung nach einem der Ansprüche 2 bis 6, ferner aufweisend
ein Sicherungselement (60), das an dem Verdampfungsbehälter (25) angebracht ist, und
ein Bindeelement (BT), das das Sicherungselement (60) an die Mischplatte (50) bindet, wobei
die Heizplatte (40) dadurch gehalten wird, dass sie zwischen dem Sicherungselement (60) und der Mischplatte (50) angeordnet ist.

8. Reduktionsmittel-Zuführvorrichtung nach Anspruch 7, wobei
das Sicherungselement (60) einen ersten Abschnitt (61) beinhaltet, der an dem Verdampfungsbehälter (25) angebracht ist, einen zweiten Abschnitt (62), der mit der Heizplatte (40) in Kontakt ist und diese hält, und einen Zwischenabschnitt (63), der zwischen dem ersten Abschnitt (61) und dem zweiten Abschnitt (62) angeordnet ist,
der erste Abschnitt (61) und der zweite Abschnitt (62) aus Metall hergestellt sind, und
der Zwischenabschnitt (63) aus einem Material mit einer geringeren Wärmeleitfähigkeit als der erste Abschnitt (61) und der zweite Abschnitt (62) hergestellt ist.

9. Reduktionsmittel-Zuführvorrichtung nach Anspruch 8, wobei
der zweite Abschnitt (62) aus rostfreiem freien Stahl hergestellt ist, und
die Heizplatte (40) aus Kupfer hergestellt ist.

## Revendications

1. Dispositif d'alimentation en agent de réduction pour un système de combustion de combustible qui comporte un dispositif de purification de NOx (15) avec un catalyseur de réduction agencé dans un passage d'échappement (10ex) pour purifier du NOx contenu dans des gaz d'échappement d'un moteur à combustion interne (10), le dispositif d'alimentation en agent de réduction alimentant un agent de réduction dans le passage d'échappement (10ex) sur une position en amont du catalyseur de réduction, le dispositif d'alimentation en agent de réduction comprenant :
un tuyau d'air (23) qui définit un passage d'air (23b) dedans ;
un contenant de vaporisation (25) qui est relié au tuyau d'air (23), le contenant de vaporisation (25) définissant une chambre de vaporisation (25a) dedans qui dérive du passage d'air (23b) ;
un injecteur (70) qui injecte un composé d'hydrocarbure de liquide comme agent de réduction ;
un élément de chauffage (30, 40) qui est agencé dans la chambre de vaporisation (25a), l'élément de chauffage (30, 40) chauffant et vaporisant l'agent de réduction injecté par l'injecteur (70) ; et
une plaque de mélange (50) qui est reliée à l'élément de chauffage (30, 40), la plaque de mélange (50) s'étendant de la chambre de vaporisation (25a) dans le passage d'air (23b).

2. Dispositif d'alimentation en agent de réduction selon la revendication 1, dans lequel
l'élément de chauffage (30, 40) comporte une plaque de chauffage (40), sur laquelle l'agent de réduction sous la forme liquide injecté par l'injecteur (70) est vaporisé, et un chauffage (30) qui chauffe la plaque de chauffage (40), et
la plaque de mélange (50) est reliée à la plaque de chauffage (40).

3. Dispositif d'alimentation en agent de réduction selon la revendication 2, dans lequel
la plaque de mélange (50) est formée en un matériau présentant une plus faible conductivité thermique que la plaque de chauffage (40).

4. Dispositif d'alimentation en agent de réduction selon la revendication 3, dans lequel
la plaque de mélange (50) est réalisée avec un acier inoxydable et la plaque de chauffage (40) est réalisée avec du cuivre.

5. Dispositif d'alimentation en agent de réduction selon l'une quelconque des revendications 2 à 4, comprenant en outre
un élément élastique (40s, 400s) qui est agencé entre le chauffage (30) et la plaque de chauffage (40), dans lequel
l'élément élastique (40s, 400s) est en contact avec le chauffage (30) et la plaque de chauffage (40) tout en étant élastiquement déformé.

6. Dispositif d'alimentation en agent de réduction selon la revendication 5, dans lequel
l'élément élastique (40s, 400s) est réalisé avec un matériau qui montre une élasticité même lorsqu'une température de la plaque de chauffage (40) augmente à une température à laquelle un dépôt sur la plaque de chauffage (40) est brûlé.

7. Dispositif d'alimentation en agent de réduction selon l'une quelconque des revendications 2 à 6, comprenant en outre
un élément de retenue (60) qui est attaché au contenant de vaporisation (25) et
un élément de liage (BT) qui lie l'élément de retenue (60) à la plaque de mélange (50), dans lequel
la plaque de chauffage (40) est maintenue en étant interposée entre l'élément de retenue (60) et la plaque de mélange (50).

8. Dispositif d'alimentation en agent de réduction selon la revendication 7, dans lequel
l'élément de retenue (60) comporte une première partie (61) qui est attachée au contenant de vaporisation (25), une seconde partie (62) qui est en contact avec et maintient la plaque de chauffage (40), et une partie intermédiaire (63) qui est interposée entre la première partie (61) et la seconde partie (62),
la première partie (61) et la seconde partie (62) sont réalisées avec du métal et
la partie intermédiaire (63) est réalisée avec un matériau présentant une plus faible conductivité thermique que la première partie (61) et la seconde partie (62).

9. Dispositif d'alimentation en agent de réduction selon la revendication 8, dans lequel
la seconde partie (62) est réalisée avec un acier inoxydable et
la plaque de chauffage (40) est réalisée avec du cuivre.
